# EUROPEAN PATENT APPLICATION

(11) **EP 2 444 948 A1**
(43) Date of publication of application: **25.04.2012**
(21) Application number: 10186434.6
(22) Date of filing: 04.10.2010
(51) Int. Cl.: G09B 7/02, G09B 19/04, G09B 5/06, A63H 3/28

(54) **Toy for teaching a language**

(71) Applicant: Recht Franziska, 2357 Senningerberg (LU)
(72) Inventor: Recht Franziska, 2357 Senningerberg (LU)
(74) Representative: Lecomte, Didier

(57) **Abstract**

The present invention is directed to a toy for language teaching 1 comprising a microphone 6 adapted to record audio signals, and a control system 2 including stored language information. Furthermore, the control system 2 is adapted to receive the audio signals recorded by the microphone 6 and comprises a voice recognition system for recognizing language in the audio signals recorded with the microphone 6. The toy 1 includes also a speaker 4 adapted to play back the language information stored in the control system 2. In accordance with the present invention, the toy 1 further comprises image information corresponding to the language information which is stored in the control system 2, as well as a display 10, wherein the display 1i7 and the control system 2 are adapted to show the image information corresponding to the language information on the display 10, such that the image information corresponding to the language information may become visible to a user.

## Description

### Field of the invention

The invention is directed to a toy for language teaching, in particular for pre-school children. The toy is adapted to play back audio information and may receive inputs by a user.

### Background of the invention

in the last years a growing number of devices for improving language skills of persons have become commercially available. However, many of them require the use of a personal computer which is often unwanted or especially inappropriate for the education of young children, in particular in pre-school age.

United States Patent Application 2004/0067471 A1 discloses a method and an audio enabled toy for a phoneme playback for improving language learning skills. In particular, the audio enabled toy according to this patent application plays back phonemes and/or lingos thereby exercising the hearing ability of infants and toddlers. The phonemes are retrieved from one or more removable storages within the toy and may be selectively played back. In one embodiment, the toy according to US 2004/0067471 A1 may be capable of speech recognition, wherein a microphone may record an audio input and compare it with stored phoneme data. Accordingly, a corresponding phoneme having similar audio characteristics to the audio input may be selected and played back through a speaker system.

Unfortunately, the phonemes presented by the prior art toy may be abstract for children, in particular in pre-school age. Additionally, the teaching according to the above mentioned patent application may overburden small children, particularly if directed to combined words or words comprising a large number of syllables. In general, the toy does not seem to be suitable to teach a complete language (even if basic) to a child. Furthermore, the toy is not suitable for multiple children playing together. Particularly, it is often desired to provide toys or learning systems that may involve multiple children and preferably also parents or teachers. Involving further persons in a game, or a language teaching session respectively, can additionally improve the social abilities of children and may also enhance entertainment.

United States Patent Application 2008/0280268 A1, discloses a toy system for teaching a language to children. This system includes a so-called base unit stylized in a real world environmental theme (e.g. a supermarket). The system includes a variety of accessories in the environment which can be used to learn words and/or phrases. The unit comprises an identifies, whereas each accessory can have a unique pattern of projections, so that when an accessory is associated with the identifier, a controller may generate a responsive output, e.g. by playing back a word describing the accessory.

Unfortunately, the language teaching capabilities of this system are rather limited. Merely language related to one environment can be taught, e.g. words or phrases related to a supermarket. Furthermore, the number of words and phrases which can be taught by such a toy is limited due to the limited number of accessories. In particular, it is not appropriate to provide such a toy with e.g. hundreds or even thousands of accessories. Furthermore, identification of the user input is performed by mechanical means which might be damaged after a time. Moreover, the system is not able to interact with the child because it can only play back language. In contrast, inputs are only possible via associating the accessories which does not allow for a control of a child's active language abilities.

Thus, considerable room for improvements remains. The technical problem arising in view of the above mentioned prior art may thus be regarded as to overcome at least one of the above mentioned disadvantages and in particular to provide a more advanced language teaching toy, especially allowing for an easier and/or more versatile language teaching.

### Summary of the invention

The above mentioned technical problem is solved by the toy for language teaching according to claim 1. This toy comprises a microphone adapted to record audio signals, a control system including stored language information, wherein the control system is adapted to receive the audio signals recorded by the microphone. Furthermore, the control system comprises a voice recognition system for recognizing language in the audio signals recorded with the microphone. Moreover, the toy comprises a speaker adapted to play back the language information stored in the control system. In accordance with the invention the toy further comprises image information corresponding to the language information being stored in the control system and also a display. In particular, the display and the control system are adapted to show the image information corresponding to the language information, such that the image information corresponding to the language information becomes visible to a user. Thus, it is provided a toy for language teaching / learning which allows for an easier and/or more versatile language teaching. In particular, language information, as for example words or sentences may be played back by the toy and corresponding image information may be additionally shown to the user or child allowing for a better understanding or comprehension of the child. The display may show a nearly unlimited number of image information corresponding to language information. The only restriction is the capacity of the control system. However, recent improvements in the field of storage technologies allow for a virtually unlimited amount of information storable in the control system. Furthermore, the toy may receive an audio input by the user and may thus analyze also the active language abilities of the user. In particular, multiple further possibilities arise from the fact that the toy includes language information stored in the control system and corresponding image information which may be shown on the display. The displayed image information may also include written words or sentences.

In a preferred embodiment the toy further comprises an actuator arranged and adapted to be actuated by a user, such that the displaying of image information corresponding to language information stored in the control system is triggered upon actuation of the actuator. With this feature the toy can be handled easily even by children in pre-school age. Preferably, the learning session may be started merely upon actuation of a single actuator. Even more preferable, the toy comprises only one actuator.

In another preferred embodiment the toy further comprises a remote switch adapted to be automatically switched on upon receipt of a remote signal, such that the toy starts to send and/or receive information. Thus, it is possible that the toy may automatically start to exchange information with its environment, e.g. with other toys or a personal computer. A child does not need to switch on the connection manually. The remote signal could come from another toy as well.

In yet another preferred embodiment the remote switch is a magnetic actuator which is adjoining the body housing of the toy (preferably inside the toy, or alternatively outside the toy), such that the remote switch is activated if the toy is in vicinity of another magnetic actuator and that the toy can start to send and/or receive information. If the remote switch is provided as magnetic actuator, the switch can be easily actuated if it is brought into vicinity of another magnetic actuator or magnetic field. Upon activation of the switch the toy is adapted to start sending and/or receiving information. This is a very easy and reliable way to provide an automatic data exchange and does not require any respective input by the child.

In accordance with another preferred embodiment of the toy, the remote signal is a magnetic field. Thus, the remote switch may be actuated by a magnetic field in general. In particular, it is possible that the remote switch in the toy may be activated by a magnet in a second toy or by a magnet in general.

In accordance with another preferred embodiment, the toy further comprises a wireless communication system adapted to send and receive information, wherein the remote switch is adapted to activate the wireless communication system, such that sending and/or receiving information is triggered upon receipt of the remote signal. Hence, toys may exchange information via a wireless connection upon receipt of a remote signal which allows for an easy data exchange between toys. In particular, toys may receive different kinds of information from each other via a wireless connection, as for example sending and/or receiving information stored in the control system, system updates, control signals / commands, or information about the owner of a toy, etc.

In accordance with another preferred embodiment of the toy, sent and/or received information comprises language information and/or image information, preferably image information and corresponding language information (or vice versa). Alternatively or in addition, the toys may be adapted to send and/or receive control signals / commands, e.g. for unlocking or activating information stored in the control system. Hence, image and/or language information stored in a toy could be unlocked or activated, upon receiving respective control signals / commands. Thus, toys can learn from each other. If a toy has learned new information from another toy (e.g. from a teacher's or supervisor's toy having a full set of image and corresponding language information) it can teach this new information to a child either by sending such information directly to the child's toy or by sending only at least one control signal for unlocking such information already stored in the control system of the child's toy. In the same manner a first toy of a first child may teach information to a second toy of a second child, such that the toy of the second child may teach the new information to the second child.

According to another preferred embodiment the toy further comprises signaling elements, wherein the signaling elements and the control system are adapted to output a signal in reply to an audio input by a user recorded by the microphone, and wherein the signal is preferably an approval or a disapproval of the audio input by the user. Such signaling elements allow for a better interaction of the toy with a user or child and may give the child an easy, fast, and/or comprehensible feedback about the answer. In particular, the signaling elements may be vibration devices or lights. Additionally, or as an alternative, the control system may also be adapted to approve or disapprove the audio input by a user via a signal on the display, e.g. a flashing, or a sound output by the speaker, e.g. via a played back sentence. Thus, a child can easily understand whether an answer has been correct or not.

According to another preferred embodiment of the toy, the image information corresponding to the language information stored in the control system comprises one or more of: at least one written word corresponding to the language information, at least one symbol indicative of the number of syllables of the language information, and an image representing the language information. In particular these features may improve the interaction with the child and may enhance the learning effect if displayed on the display of the toy.

In yet another preferred embodiment of the toy, the control system and the display are adapted to display image information corresponding to the language information on the display and to await thereafter an audio input by a user, and to process the audio input by the user in the voice recognition system, and to compare the recognized audio input with the corresponding language information stored in the control system, and to approve or disapprove the audio input by a signal, preferably via one or more of: the speaker, the display, and the signaling elements. This preferred embodiment allows for an advanced teaching of a child.

Furthermore, the present invention comprises also a toy assembly comprising at least two toys according to an embodiment of the invention. Most advantages of the toy assembly are equal to those of the toy. However, multiple toys in accordance with an embodiment of the invention may help to further increase the learning effect.

In a preferred embodiment of the toy assembly, at least two toys comprise a remote switch and a wireless communication system according to one of the above mentioned embodiments of the toy, wherein the remote switch is further adapted to be activated if the at least two toys are in vicinity, such that at least a first toy may start to send information to a second toy. In particular such a toy assembly allows for an advanced interaction of toys and users. Toys may share information and may learn from each other. Further details are described in the detailed description of the embodiments.

In accordance with another preferred embodiment of the toy assembly, the remote switch is a magnetic actuator located in a limb or another protruding portion of each toy, such that a wireless communication between at least two toys can be activated if the limbs or other protruding portions of the at least two toys are in vicinity. This embodiment allows for a wireless communication between two toys, whereas the communication is activated via magnetic actuators located in each toy. Thus, a very comfortable and easy data or information transfer may be established, such that toys may learn from each other when approaching.

In accordance with yet another preferred embodiment of the toy assembly, the remote switches of the at least two toys are adapted to be activated if the remote switches have a distance of less than 50 cm, preferably less than 10 cm. These ranges allow for an easily determinable connection or interaction of toys. In particular distances of less than 10 cm may be provided to assure an information transfer between two toys and to avoid an unintended transfer if two toys are in the same room but for example not part of the same learning group of toys and children or learning session. Furthermore, this feature could be important for teaching modes involving multiple toys and in which correct answers may be obtained by bringing at least two toys into vicinity. In particular, the remote switches could be integrated in any portion of the toy.

In accordance with another preferred embodiment of the toy assembly, a first toy comprises a first set of language information and/or corresponding image information, and a second toy comprises a second set of less language information and/or corresponding image information than the first set, wherein the first toy may be adapted to send language information and/or corresponding image information comprised in the first set but not comprised in the second set to the second toy. As an alternative or in addition, the second toy comprises also the first set of language information and/or corresponding image information, wherein the second set of language information and/or corresponding image information is a sub-set of the first set of language information and/or corresponding image information, wherein in the second toy, the language information and/or corresponding image information of the first set not comprised in the second set is locked, and the first toy is adapted to send to the second toy control signals for unlocking at least a part of the (initially) locked language information and/or corresponding image information of the second toy. In particular this advantageous embodiment allows for a new learning approach.

Furthermore, the invention is directed to a method for teaching a language using at least one toy, in accordance with one of the above embodiments, wherein the method comprises at least the steps of displaying image information corresponding to the language information on the display; awaiting thereafter an audio input by a user; processing the audio input by the user in the voice recognition system; and comparing the recognized audio input with the corresponding language information stored in the control system; and approving or disapproving the audio input depending on the comparison of the recognized audio input with the corresponding language information stored in the control system, preferably via one or more of: the speaker, the display, or the signaling elements. As already mentioned above, using an embodiment of the toy in accordance with the invention provides for a more versatile language teaching which enables particularly pre-school children to advantageously improve their language abilities.

Finally the invention is directed to a method for teaching language using at least two toys, preferably three, of the interactive toy assembly according to one of the above mentioned embodiments, wherein each one of the at least two toys displays image information corresponding to language information stored in the control system of the toys. In a next step the toys await an arrangement of the toys and/or an audio input by a user. Afterwards at least one of the toys analyzes the arrangement of the toys and/or the audio input by the user with the voice recognition systems. Then, at least one of the toys approves the arrangement and/or the audio input if constituting a meaningful combination of language information corresponding to the image information displayed by the at least two toys, or disapproves the arrangement of the toys and/or the audio input if not constituting a meaningful combination of language information corresponding to the image information displayed by the at least two toys. According to this method children can play together with multiple toys. They can either find a correct combination of image information by speaking a meaningful combination of corresponding language information or by arranging the toys in such a meaningful order. More details are explained below.

In a preferred embodiment of the method, the step of analyzing the arrangement of the toys and/or the audio input comprises establishing a wireless connection between the at least two toys, such that the toys can send and/or receive information indicative of the image information displayed on the displays of each of the at least two toys and/or of their arrangement. This feature allows for an intuitive and versatile method to teach language to children. Of course, the wireless connection might be established as described above upon bringing the toys into vicinity with each other.

### Brief description of drawings

In the following the drawings related to the embodiments of the invention are briefly described. Further details are mentioned in the detailed description of the embodiments.
Figure 1 depicts a schematic exploded view including elements of a toy in accordance with a preferred embodiment of the invention;
Figure 2 shows three preferred states of a toy depending on the actuation with an actuator;
Figure 3a shows multiple toys with magnetic actuators positioned in the limbs of the toys;
Figure 3b shows three toys having established a wireless connection;
Figure 4a depicts an assembly of toys displaying different image information;
Figure 4b depicts the assembly of toys according to figure 4a in another arrangement;
Figure 5 constitutes a flow chart showing a preferred method of language teaching with a toy in accordance with the invention; and
Figure 6 constitutes a flow chart showing another preferred mode of language teaching with multiple toys in accordance with the invention.

### Detailed description of the embodiments

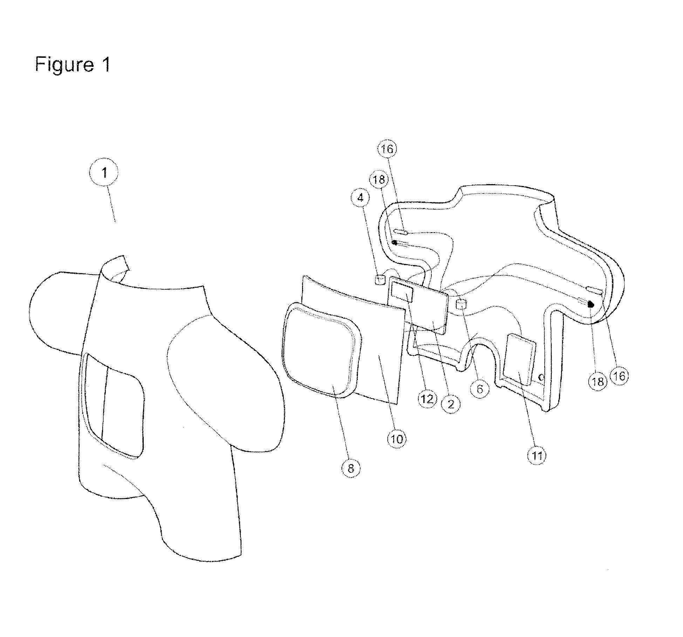

Figure 1 schematically illustrates a preferred embodiment of the toy 1 according to the invention. Of course the toy 1 may have many different shapes, as for instance the shape of a rather simple box, a teddy bear, a puppet, or a robot. However, the invention is not restricted to these examples. In general, the toy 1 may comprise an outer housing defining the shape of the toy 1. According to the invention, the toy 1 comprises a control system 2. The control system 2 preferably comprises a data storage which either may be removable or may be an integral part of the toy 1. The toy 1 further comprises a speaker 4 for playing back language information, for instance single words or groups of words or sentences. Such language information is preferably stored in the control system 2, in particular on the data storage. A microphone 6 is preferably an integral part of the toy which enables playback of language information stored in the control system 2. In general, the toy 1 may also be adapted to record audio signals by the microphone 6. Additionally, these might be stored in the control system 2 and played back via the speaker 4 to enable a user to hear his or her own voice and/or pronunciation. Furthermore, the present toy 1 exhibits a voice recognition system, preferably comprised in the control system 2. Although voice recognition systems are known in general, these are seldom used in toys. Even nearly all language learning toys known to the applicant use merely playback of stored language information. A further feature of the present invention is the display 10 which may be protected by a panel 8. The panel 8 can be made of Plexiglas or polycarbonate or of any other transparent material suitable for protecting the display 10. The display 10 and preferably the control system 2 are adapted to show image information corresponding to language information. The display 10 may preferably be an organic light emitting diode (OLEO) display. Thus, it is possible to display image information stored in the control system 2 to a child corresponding to language information stored in the control system 2 as well. Afterwards, the child may preferably speak the word(s) according to the image information and the toy 1 may check via its speech recognition system if the spoken words (audio input) of the child correspond to the language information corresponding to the image information displayed on the display 10.

Preferably, the toy 1 may further comprise a communication system 12, essentially for the sake of communication between multiple toys in accordance with the present invention, or, if desired, with another device like a personal computer. In particular, a direct connection may be established between two or more toys 1 for the sake of information exchange. The information exchanged between several toys 1, may for instance comprise language information and/or image information. In addition, or alternatively, the exchanged information may comprise control signals/commands, for example for activating or unlocking information, in particular image and/or language information, stored in the control system 2 of the toy 1. Thus, one toy 1 may learn from another toy 1, thereby enlarging its vocabulary, preferably either by receiving image and/or language information from another toy 1 via the communication system 12 or by receiving control signals or commands from the other toy 1 to unlock information or content already stored in the control system 2 of the first (learning) toy 1. The communication system 12 may be provided as wireless communication system 12, for instance in the form of a wireless local area network (WLAN) or Bluetooth. Such a system may be either integrated in the control system 2 or may be provided as separate system. In particular, no further device like a personal computer is needed for exchanging information between the toys 1. Thus, operation of and data exchange between the toys 1 are very easy. The toy 1 may further comprise an actuator 14 (not shown in Figure 1) adapted to trigger displaying an image on the display 10 of the toy 1. The actuator 14 may also be integrated in the control system 2, being responsive to key words of a user or e.g. responsive to the clapping of hands. Other events triggering the displaying of an image could be defined by a user. In particular, if acoustic, these events could be recorded by the microphone 6 before and stored in the control system 2. If the acoustic event occurs again the toy 1 will start the presentation on the display 10. The actuator 14 could also be a button or any means responsive to an applied mechanical force. In particular, the toy 1 may comprise only a single button / actuator 14. The mentioned actuators 14 can be easily used by children.

In accordance with the preferred embodiment of figure 1, the toy 1 further comprises a remote switch 16. Preferably, such a remote switch 16 of a first toy 1 is arranged and adapted to be activated if a second toy 1 approaches the first toy 1. Such a switch may preferably be a magnetic switch or actuator 16 which may be triggered by an external magnetic field. In other words, if a magnetic field is applied to the switch 16; the switch 16 preferably switches from an open configuration to a closed configuration, thereby closing an electrical circuit. Though such switches 16 may be known from other technical fields, according to the knowledge of the applicant, these have not been used in the field of toys or language teaching toys until now.

As also depicted in figure 1, the toy 1 may further comprise signaling elements 18. Signaling elements 18 could have the purpose of indicating a status of the toy 1, or of signaling whether an audio input by the user conforms to an expected input. Signaling elements 18 may be lights, as e.g. LED's. These could be positioned in limbs of the toy 1. Furthermore, additionally or as an alternative, the signaling means 18 may comprise electro-mechanical means or vibration means enabling movement of at least one portion of the toy, as for example of a limb or a head of the toy 1. Preferably, signaling elements 18 can be adapted to indicate the status of a (wireless) connection via the communication system 12. For instance they could glow or flash if two toys 1 have established a wireless connection, If multiple toys 1 are involved in teaching, the signaling elements 18 can thus indicate which toys 1 are connected and send and/or receive information.

Furthermore, the toy may comprise an energy source as for example a battery 11 or solar cells. The person skilled in the art can easily implement such technical elements. It is possible as well that the toy 1 comprises a base station for exchanging information with the base station and/or recharging batteries.

The toy 1 may further comprise a light which might be switched on or off by means of a mechanic switch or by a voice command using the voice recognition system. The light may be part of the signaling elements 18 and the switch may be the actuator 14.

In general, all the above described features 2, 4, 6, 8, 10, 11, 12, 14, 16, 18 may be comprised in the (outer) housing of the toy 1.

In the following preferred modes methods of operating /using a toy 1 in accordance with a preferred embodiment of the invention are described.

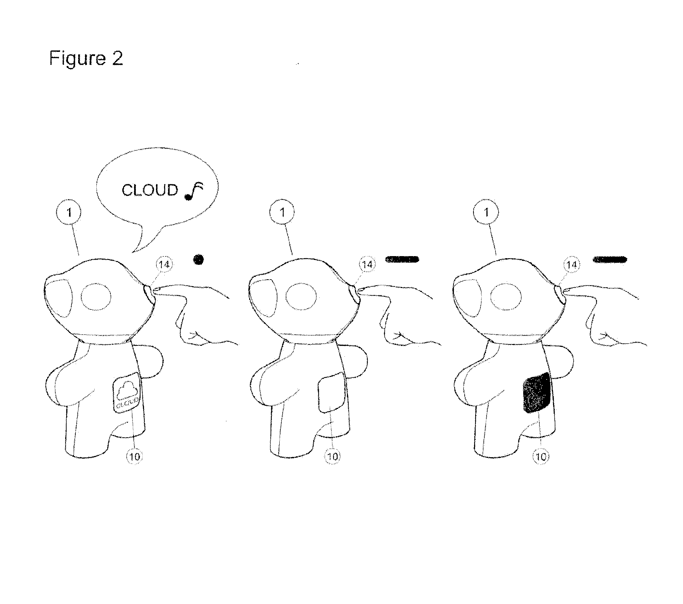

Preferably, the toy 1 could be adapted to be activated by actuating the actuator 14, for instance via a mechanical force or an acoustic command. After activation, information may be displayed on the display 10 as for example an image of a cloud. Preferably image information corresponding to language information is displayed as shown on the left-hand side of figure 2. Alternatively, a greeting image and/or text is displayed first and/or a welcome acoustic signal is played back. By actuating the actuator 14 again, language teaching may be started.

The control system 2 can also be adapted to finish the teaching/learning session upon a long actuation of the actuator 14, e.g. more than 2 seconds as shown in the middle of figure 2. Then the display 10 may preferably show an image or a screensaver, and/or could constitute a light, e.g. a night light. Upon another long actuation of the actuator 14, the toy 1 may be switched off as shown on the righthand side of figure 2. In this configuration the display 10 is disabled as well.

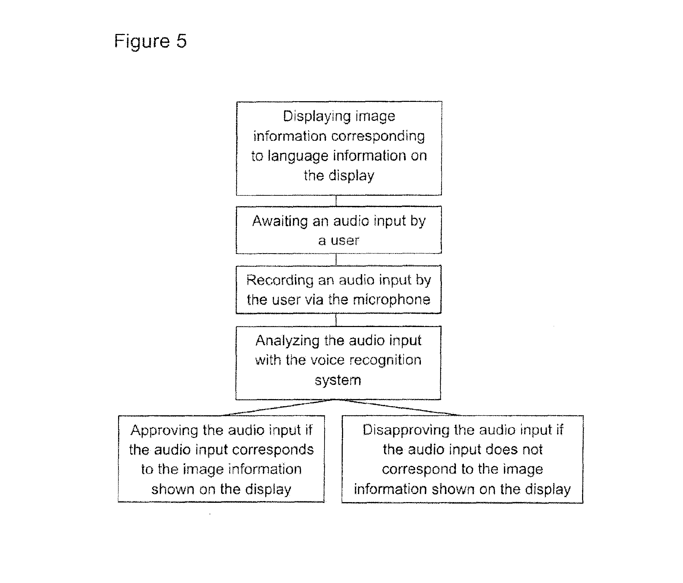

Furthermore, the toy 1 may be adapted to operate as shown in the flow chart of figure 5. In a first step image information corresponding to language information is displayed on the display 10. In a next step an audio input by a user is recorded. In a further step the user's audio input is analyzed via the voice recognition system. Depending on the outcome of this analysis, the user's audio input is either approved via a first output signal if the analyzed audio input of the user corresponds to language information corresponding to the displayed image information, or disapproved via a second output signal if the analyzed audio input of the user does not correspond to the language information corresponding to the displayed image information.

A displayed image may for example correspond to a word stored on the data storage. This could be for example the image of a cloud as shown in figure 2. Additionally, the corresponding word "cloud" could also be displayed as text on the display 10 as also depicted in figure 2. Furthermore, the corresponding language information may also be played back when showing the image, as for instance the spoken word "cloud".

Alternatively, it is possible that an image is displayed, e.g. again an image of a cloud, and that the toy waits for an audio input by the user. An audio input is then analyzed by the voice recognition system. If the voice recognition system identifies the word "cloud", the toy confirms the correct audio input, for instance by signaling means and/or a sound and/or an approval image on the display.

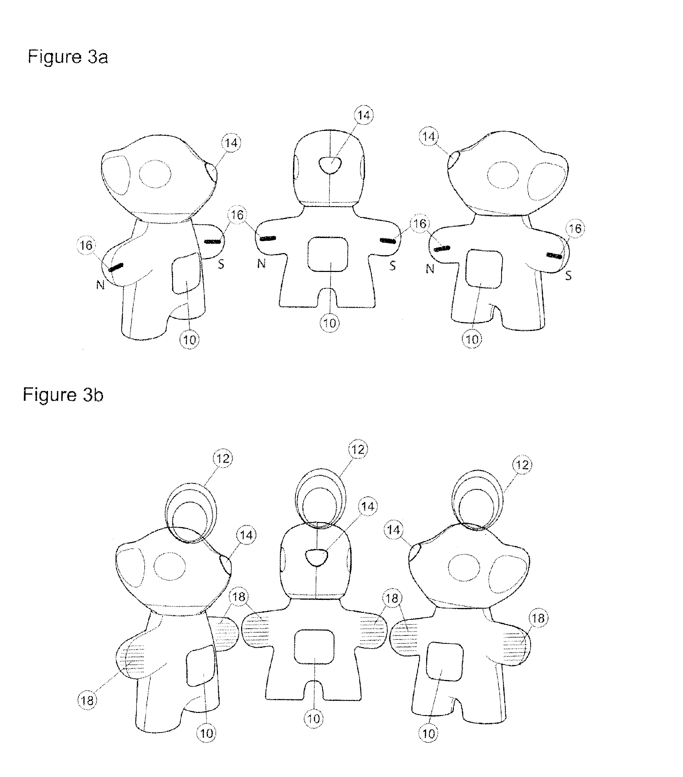

In another preferred mode, toys might exchange information between each other. For example two toys, if being brought into vicinity with each other, may be adapted to automatically actuating a remote switch 16. An example for such a configuration is shown in figure 3a. Three toys are depicted with schematically shown magnetic fields indicated by the letter N (North) and S (South). In case two of the toys 1 are close enough, the magnetic actuators may interact such that a wireless connection for an exchange of information is established. This situation is shown in figure 3b. As a result the two or even more toys (three in figure 3b) activate a wireless connection and start to exchange information or data, in particular language information and/or image information stored in their control system and/or may send control signals or commands to each other. The established connection could be confirmed by signaling elements 18 (as schematically shown in figure 3b), the display 10, or by an audio output via the speaker 4.

In general, at least one toy may comprise a full set of language information and corresponding image information (for example a toy of a supervisor, parent or teacher). This means for example at least 1.000 words and 1.000 corresponding images, or preferably at least 5.000 words and 5.000 corresponding images. Another toy of another child starting to learn with the toy may comprise a set of less language and corresponding image information, as for example less than 500 words and corresponding images. The control system 2 of the first toy may be adapted to send at least a part of the full set not comprised in the set of the second toy to the second toy (for example at least 50 words, preferably at least 200 words, and corresponding images). Alternatively a (full), or essentially the same, set of language and/or corresponding image information may be comprised in multiple toys, whereas a part of the set may be locked for some toys. For instance, as described before, the set may comprise at least 1.000 words and 1.000 corresponding images, whereas less than 500 of them are unlocked. Only this unlocked language and corresponding image information will be used or available for language teaching. The remaining words of the set are not displayed or played back until they are activated or unlocked by a control signal or command received by another toy (e.g. the supervisor's toy). Thus, a toy of a child may learn image and/or language information either by receiving the latter from another toy comprising a full or major set of image and/or corresponding language information or by receiving a command or control signal activating or unlocking locked or inactive image and/or language information of the set stored in the control system 2 of the child's toy. Receiving only a command or control signal results in a fast update or learning process of a toy, whereas exchange of image and/or language information allows for further updates and more content for teaching.

In another preferred embodiment of the toy 1, the latter comprises a set of language and/or corresponding image information whereas a part of the set is locked or inactive, such that it is not used for language teaching. If the child or the user makes progress in learning, the control system 2 of the toy 1 may be adapted to unlock at least a part of the locked image and/or language information. Thus, new or more language and/or corresponding image information can be taught to the child.

In yet another mode or embodiment, the toy may be additionally adapted to invite the child to identify the content displayed on the display 10, as for example: "What do you see on the display?". This question could be asked before the second step shown in figure 5. For instance the child could additionally or alternatively be asked for the number of syllables of a displayed word. Then the child might either answer in words or by clapping the number of syllables. The reply of the child would be analyzed by means of the voice recognition system and the reply could either be confirmed or disapproved as described already above.

Alternatively, the child might be asked for a word with a certain number of syllables. The reply of the child would be analyzed by means of the voice recognition system and the reply could either be confirmed or disapproved as described above.

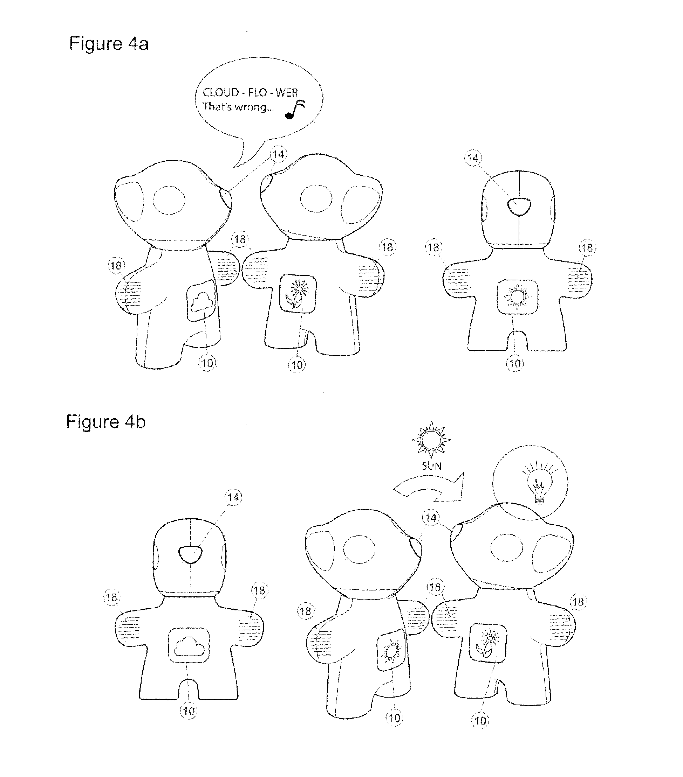

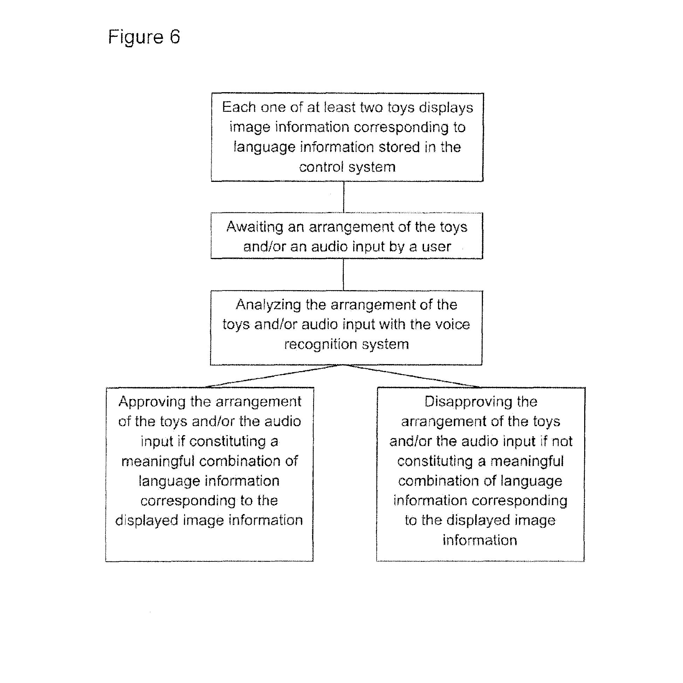

If multiple toys (at least two, preferably three) have established a wireless connection with each other, which might be triggered by the remote control switch 16 of each toy, they may display image information on their displays 10 as shown e.g. in figures 4a and 4b. Then, the users might be asked to combine the words displayed in the form of image information on the display 10. In case of three toys the image information (images) might correspond to the words "cloud", "flower", and "sun" as depicted in figure 4a. Afterwards, the toys await a possible or meaningful combination of the words by the child. A correct answer could be e.g. "sun flower" constituting a meaningful combination of the presented words. As an alternative, the toy displaying the word "cloud" could be moved away from the other two toys such that only the correctly arranged or positioned combination remains, wherein this correct combination may be sensed via the remote switches 16 as indicated in figure 4b. Approval or disapproval could be performed as described above by at least one of the toys. In particular signaling elements 18 could glow or flash. Possible steps of such an embodiment are additionally shown in the flow chart of figure 6.

Of course the above mentioned examples must not be understood in a limiting sense. In general, the above mentioned features and/or steps could be combined or substituted with each other. In particular, the different modes of using or operating the toy may also be combined with each other.

### List of reference signs

- 1: toy
- 2: control system
- 4: speaker
- 6: microphone
- 8: panel
- 10: display
- 11: battery
- 12: communication system
- 14: actuator
- 16: remote switch
- 18: signaling elements

## Claims

1. Toy for language teaching (1) comprising:
a microphone (6) adapted to record audio signals;
a control system (2) including stored language information, wherein the control system (2) is adapted to receive the audio signals recorded by the microphone (6), and wherein the control system (2) further comprises a voice recognition system for recognizing language in the audio signals recorded with the microphone (6);
a speaker (4) adapted to play back the language information;
**characterized in that** the toy further comprises:
image information corresponding to the language information being stored in the control system (2); and
a display (10), wherein the display (10) and the control system (2) are adapted to show the image information corresponding to the language information on the display (10), such that the image information corresponding to the language information may become visible to a user.

2. The toy according to claim 1, further comprising preferably a single actuator (14) arranged and adapted to be actuated by a user, such that the displaying of image information corresponding to language information stored in the control system (2) is triggered upon actuation of the actuator (14).

3. The toy according to one of the preceding claims further comprising a remote switch (16) adapted to be automatically switched on upon receipt of a remote signal, such that the toy starts to send and/or receive information.

4. The toy according to claim 3, wherein the toy further comprises a body housing and the remote switch (16) is a magnetic actuator (16) which is preferably adjoining the body housing of the toy, such that the remote switch is activated if the
toy is in vicinity of another magnetic actuator, so that the toy can start to send and/or receive information.

5. The toy according to claim 3 or 4, further comprising a wireless communication system (12) adapted to send and/or receive information; and wherein the remote switch (16) is adapted to activate the wireless communication system (12), such that sending and/or receiving information is triggered upon receipt of the remote signal.

6. The toy according to one of claims 3 to 5, wherein the sent and/or received information comprises language information and/or image information.

7. The toy according to one of the preceding claims, further comprising signaling elements (18), wherein the signaling elements (18) and the control system (2) are adapted to output a signal in reply to an audio input by a user recorded by the microphone (6), and wherein the signal is preferably an approval or a disapproval of the audio input by the user.

8. The toy according to one of the preceding claims, wherein the image information corresponding to the language information comprises one or more of: at least one written word corresponding to the language information, at least one symbol indicative of the number of syllables of the language information, and an image representing the language information.

9. The toy according to one of the preceding claims, wherein the control system (2) and the display (10) are adapted to display image information corresponding to the language information on the display (10) and to await thereafter an audio input by a user, and to process the audio input by the user in the voice recognition system (8), and to compare the recognized audio input with the corresponding language information stored in the control system (2), and to approve or disapprove the audio input depending of the comparison of the recognized audio input with the corresponding language information stored in the control system (2), preferably via one or more of: the speaker (4), the display (10) or the signaling elements (18).

10. An interactive toy assembly comprising at least two toys according to one of the preceding claims, wherein at least two toys comprise a remote switch (16) and a wireless communication system (12) according to claim 5, wherein the remote switch (16) is further adapted to be activated if the at least two toys are in vicinity, such that at least a first toy may start to send information to a second toy.

11. The toy assembly according to claim 10, wherein the remote switch (16) is a magnetic actuator located in a limb or another protruding portion of each toy, such that a wireless communication between at least two toys can be activated if the limbs or other protruding portions of the at least two toys are in vicinity.

12. The toy assembly according to claim 10 or 11, wherein the remote switches (16) of the at least two toys are adapted to be activated if the remote switches (16) have a distance of less than 50 cm, preferably less than 10 cm.

13. The toy assembly according to one of claims 10 to 12, wherein
a first toy comprises a first set of language information and/or corresponding image information, and
a second toy comprises a second set of less language information and/or corresponding image information than the first set, wherein either
a) the first toy is adapted to send language information and/or corresponding image information comprised in the first set but not comprised in the second set to the second toy, or
b) the second toy comprises also the first set of language information and/or corresponding image information, wherein the second set of language information and/or corresponding image information is a sub-set of the first set of language information and/or corresponding image information, wherein
in the second toy, the language information and/or corresponding image information of the first set not comprised in the second set is locked, and
the first toy is adapted to send to the second toy control signals for unlocking at least a part of the locked language information and/or corresponding image information of the second toy.

14. A method for teaching language using the toy according to one of the claims 1 to 9, comprising the steps of:
displaying image information corresponding to the language information on the display (10);
awaiting thereafter an audio input by a user;
processing the audio input by the user in the voice recognition system (8), and comparing the recognized audio input with the corresponding language information stored in the control system (2); and
approving or disapproving the audio input depending on the comparison of the recognized audio input with the corresponding language information stored in the control system (2), preferably via one or more of: the speaker (4), the display (10) or the signaling elements (18).

15. A method for teaching language using at least two toys of the interactive toy assembly according to one of claims 10 to 13, the method comprising the steps of:
each one of the at least two toys (1) display image information corresponding to language information stored in their control systems (2);
awaiting an arrangement of the toys (1) and/or an audio input by a user;
analyzing the arrangement of the toys (1) and/or the audio input by the user with the voice recognition system;
approving the arrangement of the toys (1) and/or the audio input if constituting a meaningful combination of language information corresponding to the image information displayed by the at least two toys (1); or
disapproving the arrangement of the toys (1) and/or the audio input if not constituting a meaningful combination of language information corresponding to the image information display by the at least two toys (1).
